# EUROPÄISCHE PATENTANMELDUNG

(11) **EP 3 686 450 A1**
(43) Veröffentlichungstag der Anmeldung: **29.07.2020**
(21) Anmeldenummer: 19154008.7
(22) Anmeldetag: 28.01.2019
(51) Int. Cl.: F16C 29/00, F16C 33/62, F16C 33/30, A47B 88/493, F16C 29/04, A47B 88/45, F16C 33/64, F16C 29/06

(54) **TELESKOPSCHIENE MIT MINDESTENS DREI SCHIENENELEMENTEN**

(71) Anmelder: Nadella GmbH, 71154 Nufringen (DE)
(72) Erfinder: Schwertner, Thomas, 82515 Wolfratshausen (DE); Schilli, David, 77797 Ohlsbach (DE)
(74) Vertreter: Pistorius, Richard

(57) **Zusammenfassung**

Bei einer Teleskopschiene mit einer ersten und einer zweiten Führungsschiene und mit einer Zwischenschiene 120, wobei die erste Führungsschiene an einer ersten Laufbahn 1126 der Zwischenschiene geführt ist und die zweite Führungsschiene an einer zweiten Laufbahn 1128 der Zwischenschiene geführt ist, wobei die erste und zweite Führungsschiene jeweils über Wälzkörper 118 an der Zwischenschiene geführt sind, ist zumindest ein Wälzkörperschlitten 700 vorgesehen, der mit der ersten oder zweiten Führungsschiene verbunden ist und dazu ausgebildet ist, die erste oder zweite Führungsschiene über die Wälzkörper an der Zwischenschiene zu führen, wobei der Wälzkörperschlitten eine dritte Laufbahn 1041 aufweist, wobei zumindest der Wälzkörperschlitten oder die Zwischenschiene einen zugeordneten Grundkörper 710, 1120 aufweist, wobei an dem zugeordneten Grundkörper mindestens ein Laufbahnelement 1122, 902 zur Ausbildung der ersten, zweiten oder dritten Laufbahn befestigt ist, und wobei der Grundkörper ein erstes Material aufweist und das Laufbahnelement zumindest abschnittsweise ein zweites Material aufweist.

## Beschreibung

Die vorliegende Erfindung betrifft eine Teleskopschiene mit einer ersten und einer zweiten Führungsschiene und mit einer Zwischenschiene, wobei die erste Führungsschiene an einer ersten Laufbahn der Zwischenschiene geführt ist und die zweite Führungsschiene an einer zweiten, zur ersten Laufbahn parallel verlaufenden Laufbahn der Zwischenschiene geführt ist, wobei die erste und zweite Führungsschiene jeweils über Wälzkörper an der Zwischenschiene geführt sind.

Aus dem Stand der Technik, z.B. aus den Dokumenten CN 105370731 A und EP 1 512 607 A1, ist eine derartige Teleskopschiene mit Führungsschienen, einer Zwischenschiene, sowie mit Wälzkörpern zur Führung der Führungsschienen an der Zwischenschiene bekannt. Dabei ist die Zwischenschiene mit Laufbahnen versehen, an denen die Führungsschienen geführt sind. Des Weiteren sind die Wälzkörper jeweils in Wälzkörperkäfigen angeordnet. Die Laufbahnen sind dabei als separates vergleichsweise dünnes Teil ausgebildet, welches an der Führungsschiene und/oder der Zwischenschiene angeordnet ist. Des Weiteren ist aus der WO 2009114396 A2 eine Linearführung mit Laufbahnen bekannt, die über eine Clipverbindung an der Führungsschiene oder der Zwischenschiene angeordnet sind. Darüber hinaus sind aus dem Stand der Technik, z.B. der US 5 195 391 A und der EP 0 790 421 A1 Linearführungen bekannt, bei denen die Wälzkörper in Wälzkörperschlitten mit Umlaufbahnen geführt sind.

Nachteilig ist bei diesen gebräuchlichen Teleskopschienen oder Linearführungen jedoch, dass die Laufbahnen vergleichsweise dünn ausgebildet sind und somit eine vergleichsweise geringe Last aufnehmen können. Dies kann zu einer Zerstörung der jeweiligen Laufbahn führen und somit bei einem Verfahren der Teleskopschiene von der zusammengefahrenen Position in die ausgefahrene Position, oder umgekehrt, zu einem ungleichmäßigen und unvollständigen Verfahren der Teleskopschiene führen. Darüber hinaus sind die genannten Teleskopschienen oder Linearführungen nicht für eine Biegebelastung ausgelegt.

Es ist deshalb eine Aufgabe der vorliegenden Erfindung, eine Teleskopschiene mit einer ersten und einer zweiten Führungsschiene und mit einer Zwischenschiene, sowie mit Wälzkörpern zur Führung der Führungsschienen an der Zwischenschiene bereitzustellen, bei der durch eine verbesserte Lastaufnahme der Laufbahnen eine stabile und robuste Teleskopschiene realisiert werden kann.

Diese Aufgabe wird gelöst durch eine Teleskopschiene gemäß der vorliegenden Erfindung. Hierbei weist die Teleskopschiene erfindungsgemäß eine erste und eine zweite Führungsschiene und eine Zwischenschiene auf. Die erste Führungsschiene ist an einer ersten Laufbahn der Zwischenschiene geführt und die zweite Führungsschiene ist an einer zweiten, zur ersten Laufbahn parallel verlaufenden Laufbahn der Zwischenschiene geführt, wobei die erste und zweite Führungsschiene jeweils über Wälzkörper an der Zwischenschiene geführt sind. Zumindest ein Wälzkörperschlitten ist vorgesehen, der mit der ersten oder zweiten Führungsschiene verbunden ist und dazu ausgebildet ist, die erste oder zweite Führungsschiene über die Wälzkörper an der Zwischenschiene zu führen. Der Wälzkörperschlitten weist eine dritte Laufbahn auf, die der ersten oder zweiten Laufbahn der Zwischenschiene zugewandt angeordnet ist, wobei zumindest der Wälzkörperschlitten oder die Zwischenschiene einen zugeordneten Grundkörper aufweist. An dem zugeordneten Grundkörper ist mindestens ein Laufbahnelement zur Ausbildung der ersten, zweiten oder dritten Laufbahn befestigt, und wobei der Grundkörper ein erstes Material aufweist und das Laufbahnelement zumindest abschnittsweise ein zweites Material aufweist.

Die Erfindung ermöglicht somit die Bereitstellung einer Teleskopschiene, bei der durch die Ausgestaltung der Laufbahn mit einem Grundkörper und einem Laufbahnelement, die unterschiedliche Materialen aufweisen, einfach und unkompliziert eine verbesserte Lastaufnahme erreicht werden kann. Somit kann eine stabile und robuste Laufbahn ermöglicht werden.

Vorzugsweise ist das Laufbahnelement über eine Nut-Feder-Verbindung am Grundkörper befestigt. Somit kann auf einfache Art und Weise eine sichere und zuverlässige Verbindung zwischen dem Laufbahnelement und dem Grundkörper ermöglicht werden.

Das erste Material ist bevorzugt Aluminium und das zweite Material Stahl. Somit kann ein leichter Grundkörper mit einem robusten Laufbahnelement bereitgestellt werden.

Gemäß einer Ausführungsform weist das Laufbahnelement Vollmaterial auf und ist durch Kaltziehen und/oder Fräsen ausgebildet. Somit kann die Bereitstellung eines stabilen Laufbahnelements ermöglicht werden.

Bevorzugt ist die erste, zweite und/oder dritte Laufbahn derart ausgebildet, dass zwischen dem Wälzkörper und der Laufbahn zumindest ein 2-Punkt-Kontakt, bevorzugt ein 3-Punkt-Kontakt besteht. Somit kann eine vergleichsweise große Lastaufnahme ermöglicht werden.

Eine Dicke des Laufbahnelements ist vorzugsweise größer als eine maximale Eindringtiefe einer Hertzschen Pressung. Somit kann eine Zerstörung des Laufbahnelements und somit der Laufbahn aufgrund von hohen Lasten verhindert werden, wodurch ein zuverlässiger Betrieb der Teleskopschiene ermöglicht wird.

Die erste Führungsschiene ist bevorzugt über eine erste Mehrzahl von Wälzkörpern an der Zwischenschiene geführt und die zweite Führungsschiene ist über eine zweite Mehrzahl von Wälzkörpern an der Zwischenschiene geführt. Somit kann auf einfache Art und Weise eine Führung der ersten und zweiten Führungsschiene ermöglicht werden.

Vorzugsweise weist der zumindest eine Wälzkörperschlitten zumindest eine in sich geschlossene Umlaufbahn zum Führen der Wälzkörper auf, wobei die in sich geschlossenen Umlaufbahnen jeweils einen Rückführungsabschnitt und einen Führungsabschnitt aufweisen, wobei die Wälzkörper am Führungsabschnitt an der jeweiligen Laufbahn der Zwischenschiene geführt sind und der Rückführungsabschnitt innerhalb des Wälzkörperschlittens angeordnet ist. Somit kann einfach und unkompliziert eine Lastverteilung der auf die Wälzkörper wirkenden Lasten ermöglicht werden.

Gemäß einer Ausführungsform weist der Wälzkörperschlitten einen Grundkörper auf, der an seinen axialen Enden jeweils ein Umlenkelement mit einem gekrümmten Laufbahnabschnitt zum Umlenken der Wälzkörper vom Führungsabschnitt in den Rückführungsabschnitt, und umgekehrt, aufweist. Somit kann eine leichte und unkomplizierte Ausbildung der Umlaufbahn ermöglicht werden.

Die erste und/oder zweite Führungsschiene sind vorzugsweise an der Zwischenschiene zwangsgeführt, wobei die erste und zweite Führungsschiene sowie die Zwischenschiene über mindestens zwei längliche Verbindungselemente bei einem Bewegen von einer zusammengefahrenen Position in eine ausgefahrene Position, oder umgekehrt, synchronisiert sind, wobei die Zwischenschiene an jedem ihrer Enden zumindest eine Rolle zum Umlenken des jeweiligen Verbindungselements aufweist. Somit kann auf einfache Art und Weise eine Zwangsführung der ersten und/oder zweiten Führungsschiene ermöglicht werden.

Bevorzugt sind die Verbindungselemente an der jeweiligen Führungsschiene jeweils über zugeordnete Befestigungselemente fixiert, wobei die zugeordneten Befestigungselemente als Verfahrwegsbegrenzung der ersten und zweiten Führungsschiene an der Zwischenschiene in der ausgefahrenen Position ausgebildet sind. Somit kann eine kompakte Teleskopschiene bereitgestellt werden, bei der auf separate Verfahrwegsbegrenzungs-Elemente verzichtet werden kann. Gemäß einer Ausführungsform ist den Verbindungselementen jeweils eine Spannvorrichtung zum manuellen Spannen des jeweiligen Verbindungselements zugeordnet, wobei der zumindest eine Wälzkörperschlitten einen Aufnahmebereich zur Anordnung der Spannvorrichtung aufweist. Somit kann einfach und unkompliziert eine geeignete Spannung der Verbindungselemente eingestellt werden

Bevorzugt sind die Verbindungselemente nach Art eines Seils, eines Riemens und/oder einer Kette ausgebildet und sind dazu ausgebildet, Druckkräfte und/ oder Zugkräfte aufzunehmen. Somit kann ein kostengünstiges und stabiles Verbindungselement bereitgestellt werden

Die erste und zweite Führungsschiene sowie die Zwischenschiene weisen vorzugsweise jeweils eine Länge auf, die einer ersten Länge der Teleskopschiene in der zusammengefahrenen Position entspricht, wobei die Teleskopschiene in der ausgefahrenen Position eine zweite Länge aufweist, die zumindest annähernd der doppelten ersten Länge entspricht, und wobei ein relativer Verfahrweg zwischen der ersten Führungsschiene und der Zwischenschiene sowie der zweiten Führungsschiene und der Zwischenschiene zum Bewegen der Teleskopschiene von der zusammengefahrenen Position in die ausgefahrene Position, oder umgekehrt, jeweils zumindest annähernd der Hälfte der ersten Länge entspricht. Somit kann eine Hubverkürzung ermöglicht werden, wodurch eine kompakte Teleskopschiene bereitgestellt werden kann

Gemäß einer Ausführungsform ist die Zwischenschiene über eine direkte Anbindung mit einer translatorischen Bewegungseinheit verbindbar. Somit kann auf einfache Art und Weise eine Anbindung an einen Antrieb zum Verfahren der Teleskopschiene in die zusammengefahrene und/oder ausgefahrene Position ermöglicht werden.

Die Erfindung ist anhand von in den Zeichnungen dargestellten Ausführungsbeispielen in der nachfolgenden Beschreibung näher erläutert. Es zeigen:
- Fig. 1: eine perspektivische Seitenansicht einer erfindungsgemäßen Teleskopschiene,
- Fig. 2: einen vergrößerten Ausschnitt der Teleskopschiene von Fig. 1,
- Fig. 3: eine Seitenansicht des Ausschnitts von Fig. 2 zur Verdeutlichung eines Befestigungselements,
- Fig. 4: eine perspektivische Ansicht des Ausschnitts von Fig. 3,
- Fig. 5: eine Seitenansicht eines Ausschnitts der Teleskopschiene von Fig. 1 mit einem weiteren Befestigungselement,
- Fig. 6: eine schematische Draufsicht auf die Teleskopschiene von Fig. 1 mit den Befestigungselementen von Fig. 3 und Fig. 5 in einer zusammengefahrenen Position,
- Fig. 7: eine schematische Draufsicht auf die Teleskopschiene von Fig. 6 in einer ausgefahrenen Position,
- Fig. 8: eine schematische Draufsicht auf eine weitere Teleskopschiene mit den Befestigungselementen von Fig. 3 und Fig. 5 in einer zusammengefahrenen Position,
- Fig. 9: eine schematische Draufsicht auf die Teleskopschiene von Fig. 8 in einer ausgefahrenen Position,
- Fig. 10: eine schematische Ansicht der Teleskopschiene von Fig. 9,
- Fig. 11: eine perspektivische Ansicht der Teleskopschiene von Fig. 1 in der zusammengefahrenen und der ausgefahrenen Position,
- Fig. 12: eine Draufsicht auf eine der Teleskopschiene zugeordnete Zwischenschiene mit zwei Wälzkörperschlitten,
- Fig. 13: eine perspektivische Ansicht des Wälzkörperschlittens von Fig. 12,
- Fig. 14: eine perspektivische Seitenansicht der Zwischenschiene mit dem Wälzkörperschlitten von Fig. 12,
- Fig. 15: eine perspektivische Draufsicht auf den Wälzkörperschlitten von Fig. 12 bis Fig. 14 mit einem Deckelelement,
- Fig. 16: eine perspektivische Draufsicht auf den Wälzkörperschlitten ohne das Deckelelement von Fig. 15 zur Verdeutlichung eines Umlenkteils,
- Fig. 17: eine Schnittansicht der Zwischenschiene mit den zwei Wälzkörperschlitten sowie zugeordneten Laufbahnen,
- Fig. 18: eine Schnittansicht der Zwischenschiene mit den zugeordneten Laufbahnen,
- Fig. 19: eine perspektivische Draufsicht auf einen dem Wälzkörperschlitten von Fig. 16 zugeordneten Grundkörper, und
- Fig. 20: eine perspektivische Draufsicht auf eine dem Grundkörper von Fig. 19 zugeordnete Laufbahn.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

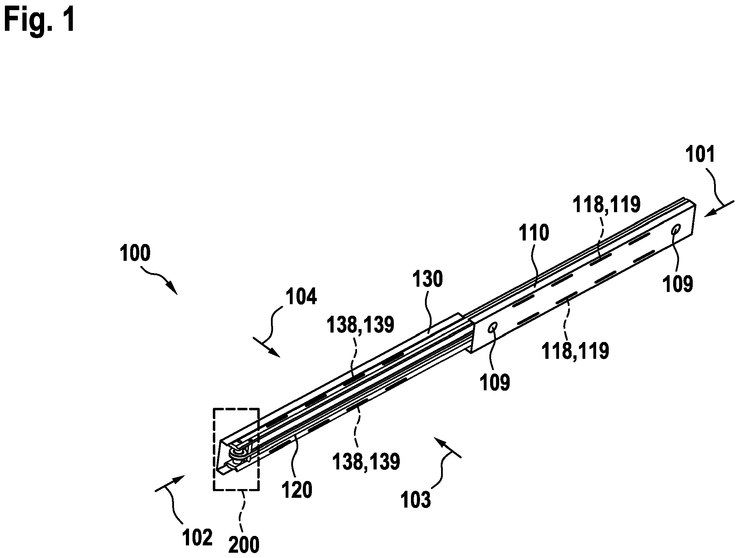

Fig. 1 zeigt eine erfindungsgemäße Teleskopschiene 100 mit einem ersten axialen Ende 101 und einem zweiten axialen Ende 102, sowie einer illustrativ vorderen Seite 103 und einer illustrativ hinteren Seite 104. Die Teleskopschiene 100 weist vorzugsweise mindestens eine Führungsschiene 110, 130 sowie mindestens eine Zwischenschiene 120 auf. Illustrativ und bevorzugt weist die Teleskopschiene 100 zumindest eine erste und zweite Führungsschiene 110, 130 sowie mindestens eine Zwischenschiene 120 auf.

In Fig. 1 ist eine illustrativ rechts angeordnete erste Führungsschiene 110 sowie eine illustrativ links angeordnete zweite Führungsschiene 130 gezeigt. Dabei ist die erste Führungsschiene 110 der vorderen Seite 103 zugewandt angeordnet, und die zweite Führungsschiene 130 ist der hinteren Seite 104 zugewandt angeordnet. Erfindungsgemäß sind die erste und zweite Führungsschiene 110, 130 an der Zwischenschiene 120 zwangsgeführt.

Es wird darauf hingewiesen, dass in Fig. 1 zur Vereinfachung der Zeichnung lediglich eine einzelne Zwischenschiene 120 gezeigt ist, sodass nachfolgend zwecks Einfachheit und Klarheit nur auf "die Zwischenschiene 120" Bezug genommen wird. Allerdings können auch zwei oder mehr Zwischenschienen Anwendung finden, wobei diese dann zumindest teilweise aneinander zwangsgeführt werden.

Bevorzugt weisen die erste und zweite Führungsschiene 110, 130 sowie die Zwischenschiene 120 ein offenes Profil auf. Die erste und zweite Führungsschiene 110, 130 weisen dabei vorzugsweise ein C-förmiges, U-förmiges, doppel-T-förmiges oder ein flaches Profil auf.

Die Zwischenschiene 120 weist bevorzugt ein U-förmiges, S-förmiges oder doppel-T-förmiges Profil auf. Dabei kann die Zwischenschiene 120 einstückig oder mehrstückig, z.B. zweistückig, ausgebildet sein. Bei einer beispielhaften zweistückigen Ausführungsform der Zwischenschiene 120 weist diese vorzugsweise zwei U-Profile oder zwei C-förmige Profile auf, die über eine beliebige Verbindung, z.B. eine Schweißverbindung, miteinander verbunden sind.

Die erste und zweite Führungsschiene 110, 130 weisen vorzugsweise jeweils zumindest ein Befestigungselement 109 auf. Das Befestigungselement 109 ist bevorzugt nach Art einer Ausnehmung, einer Schraube und/oder eines Stifts ausgebildet. Das Befestigungselement 109 ist dabei vorzugsweise dazu ausgebildet, eine Befestigung der Teleskopschiene 100 über eine Führungsschiene 110, 130 an einem Gegenstand zu ermöglichen und/oder eine Verbindung der Teleskopschiene 100 mit einem zu bewegenden Gegenstand zu ermöglichen.

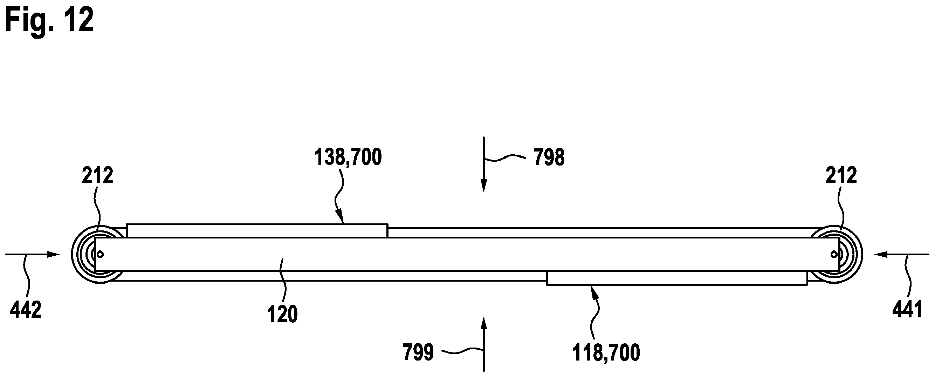

Vorzugsweise ist zumindest eine Führungsschiene 110, 130 über Wälzkörper 118, 138 an der Zwischenschiene 120 geführt. Illustrativ und vorzugsweise sind die erste und zweite Führungsschiene 110, 130 über eine Mehrzahl 119, 139 von Wälzkörpern 118, 138 an der Zwischenschiene 120 geführt. Hierbei ist vorzugsweise die erste Führungsschiene 110 über eine erste Mehrzahl 119 von Wälzkörpern 118 an der Zwischenschiene 120 geführt und die zweite Führungsschiene 130 ist über eine zweite Mehrzahl 139 von Wälzkörpern 138 an der Zwischenschiene 120 geführt. Dabei sind die Wälzkörper 118, 138 vorzugsweise in einem Wälzkörperschlitten (700 in Fig. 12) angeordnet.

Hierbei kann ein Wälzkörperschlitten (700 in Fig. 12) an einer illustrativ oberen und/oder unteren Wälzfläche der jeweiligen Führungsschiene 110, 130 angeordnet sein. Jedoch kann der Wälzkörperschlitten (700 in Fig. 12) auch derart ausgebildet sein, dass er illustrativ obere und untere Wälzkörper 118, 138 miteinander verbindet.

Gemäß einer Ausführungsform sind die Wälzkörper 118, 138 nach Art von Kugeln, Kegeln, Nadeln usw. ausgebildet. Durch die Wälzkörper 118, 138 ist eine mehrachsige Lastaufnahme möglich. Dabei wird eine formschlüssige Synchronisierung realisiert, die keine Rutschkupplung erfordert. Die Synchronisierung ist dabei zumindest abschnittsweise in der Teleskopschiene 100 angeordnet, bevorzugt komplett in der Teleskopschiene 100 platziert.

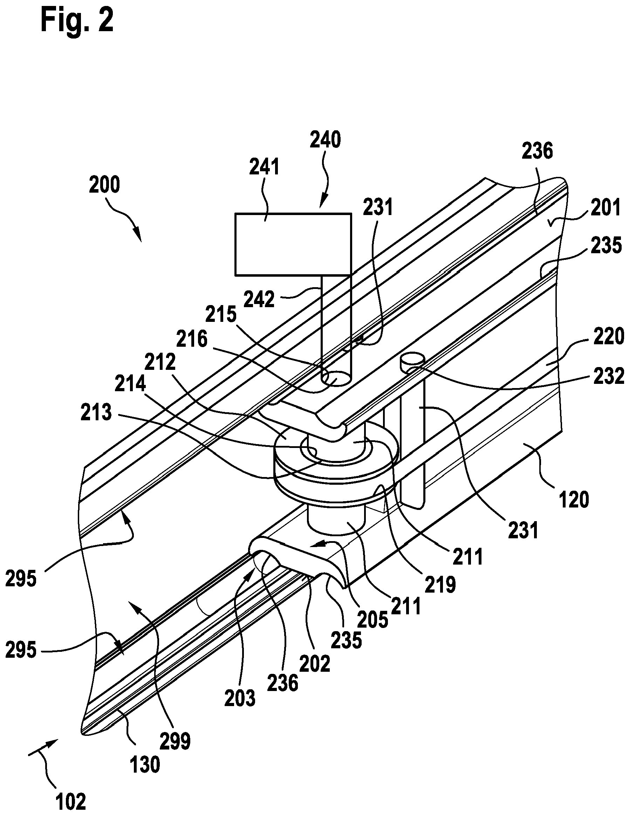

Der Wälzkörperschlitten (700 in Fig. 12) bewegt sich bei einem Verfahren der Teleskopschiene 100 mit der jeweiligen Führungsschiene 110, 130 mit. Des Weiteren zeigt Fig. 1 einen Ausschnitt 200, der nachfolgend in Fig. 2 beschrieben wird.

Fig. 2 zeigt den Ausschnitt 200 von Fig. 1 mit der Zwischenschiene 120 und der zweiten Führungsschiene 130. Die Zwischenschiene 120 weist exemplarisch und vorzugsweise eine Doppel-T-Träger-Form auf und ist illustrativ an einer Innenseite 299 der zweiten Führungsschiene 130, bzw. der Teleskopschiene 100 von Fig. 1, angeordnet.

Illustrativ weist die Zwischenschiene 120 eine obere Seite 201 und eine untere Seite 202 auf, wobei zumindest an der oberen Seite 201 und/oder unteren Seite 202 eine erste Laufbahn 235 und eine zweite Laufbahn 236 zum Zwangsführen der ersten und zweiten Führungsschiene 110, 130 vorgesehen ist. Beispielhaft weist die Zwischenschiene 120 in Fig. 2 eine erste Laufbahn 235 auf der oberen Seite 201 und der unteren Seite 202 auf, wobei die erste Laufbahn 235 exemplarisch im Bereich des linken Endes der oberen und unteren Seite 201, 202 angeordnet ist und zum Führen der ersten Führungsschiene 110 ausgebildet ist. Die zweite Laufbahn 236 ist vorzugsweise parallel zur ersten Laufbahn 235 angeordnet, wobei die zweite Laufbahn 236 illustrativ an einem linken Ende der Zwischenschiene 120 angeordnet ist und zum Führen der zweiten Führungsschiene 130 ausgebildet ist.

Illustrativ weisen die Laufbahnen 235, 236 jeweils eine halbrunde Form auf, sie können jedoch auch eine V-förmige und/oder trapezförmige Form aufweisen. Des Weiteren weist die repräsentativ für die erste und zweite Führungsschiene 110, 130 eingezeichnete zweite Führungsschiene 130 an ihrer jeweils der Zwischenschiene 130 bzw. der zweiten Laufbahn 236 zugewandten Seite eine Laufbahn 295 auf. Die erste und/oder zweite Laufbahn 235, 236 sind dabei zur Anordnung der Wälzkörper 118, 138 von Fig. 1 ausgebildet. Dabei wird zumindest ein 2-Punkt-Kontakt der Wälzkörper 118, 138 mit der Laufbahn 235, 236, 295 ausgebildet. Vorzugsweise wird ein 3-Punkt-Kontakt oder ein 4-Punkt-Kontakt der Wälzkörper 118, 138 mit der Laufbahn 235, 236, 295 ausgebildet.

Bevorzugt weisen die Laufbahnen 235, 236 einen Herausfallschutz auf. Dieser ist vorzugsweise nach Art eines Stiftes 231 ausgebildet, der bevorzugt in einer Ausnehmung 232, die in der Laufbahn 235, 236 ausgebildet ist, angeordnet ist. Dabei kann der Stift 231 einer illustrativ oberen und/oder unteren Laufbahn 235, 236 zugeordnet sein.

Illustrativ ist der Stift 231 als Herausfallschutz der oberen und unteren Laufbahn 235, 236 ausgebildet. Jedoch kann der Stift 231 auch entweder nur der oberen oder nur der unteren Laufbahn 235, 236 zugeordnet sein, wobei der Stift 231 nicht durchgängig ausgebildet ist.

Des Weiteren kann auch lediglich ein Stift 231 als Herausfallschutz einer Führungsschiene 110, 130 vorgesehen sein. Dabei kann z.B. ein Stift 231 der oberen, linken Laufbahn 235 und ein Stift 231 der unteren, rechten Laufbahn 236 zugeordnet sein. Es wird jedoch darauf hingewiesen, dass dabei die Stifte 231 auch jeweils nur auf der oberen oder unteren Laufbahn 235, 236 angeordnet sein können.

Bevorzugt weisen die Führungsschienen 110, 130 eine Gegenkontur zum Herausfallschutz bzw. zum Stift 231 auf. Die Gegenkontur kann dabei als Schraube, Stift, Platte und/oder als eingedrückte Stelle ausgebildet sein.

Die erste und zweite Führungsschiene 110, 130 sowie die Zwischenschiene 120 sind bevorzugt über mindestens zwei längliche Verbindungselemente 220 bei einem Bewegen von einer zusammengefahrenen Position in eine ausgefahrene Position, oder umgekehrt, synchronisiert. Die mindestens zwei länglichen Verbindungselemente 220 sind vorzugsweise nach Art eines Seils, eines Riemens und/oder einer Kette ausgebildet.

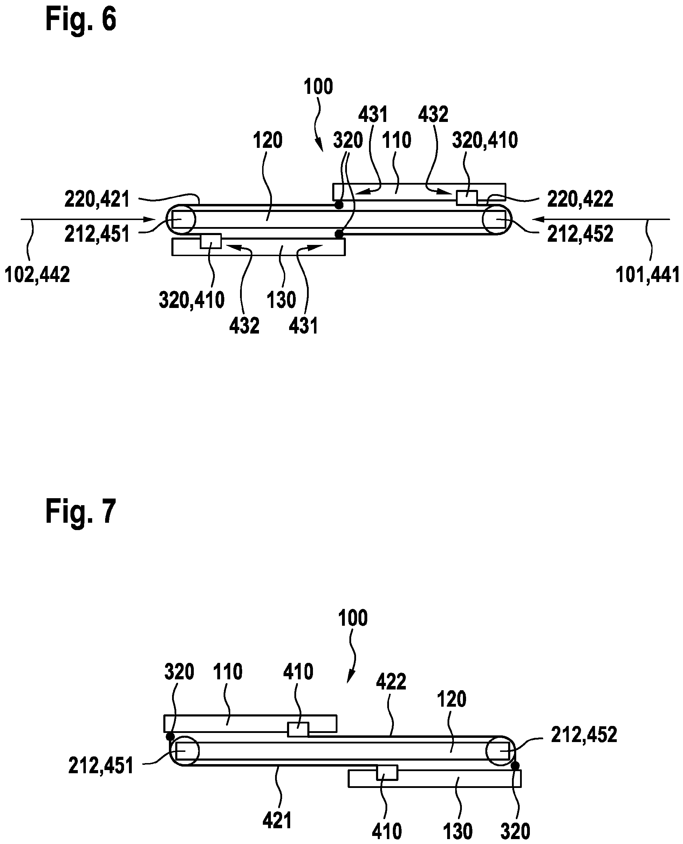

Darüber hinaus sind die mindestens zwei länglichen Verbindungselemente 220 bevorzugt dazu ausgebildet, Druckkräfte und/oder Zugkräfte aufzunehmen. Vorzugsweise weist die Zwischenschiene 120 an jedem ihrer Enden (441, 442 in Fig. 6) zumindest eine Rolle 212 zum Umlenken von mindestens einem Verbindungselement 220 auf, sodass die Zwischenschiene 120 vorzugsweise zumindest zwei Rollen 212 aufweist.

Die zumindest zwei Rollen 212 sind bevorzugt dazu ausgebildet, ein Drehmoment zu übertragen. Dabei sind die Rollen 212 vorzugsweise antreibbar, bevorzugt elektrisch, mechanisch, pneumatisch und/oder hydraulisch.

Illustrativ weist die Zwischenschiene 120 an ihren axialen Enden, von denen in Fig. 2 illustrativ nur ein einzelnes axiales Ende gezeigt und mit dem Bezugszeichen 203 gekennzeichnet ist, jeweils eine Ausnehmung 205 zur Anordnung der Rolle 212 auf. Die Rolle 212 ist dabei vorzugsweise über zumindest ein Lagerelement 213, das illustrativ in einer Aufnahme 214 der Rolle 212 angeordnet ist, auf einem Rotationsübertragungselement 211 angeordnet.

Bevorzugt ist das Rotationsübertragungselement 211 als Welle oder Achse ausgebildet. Dabei kann eine Welle ein Moment aufnehmen und eine Achse nicht. Das Rotationsübertragungselement 211 kann jedoch auch außermittig an der Zwischenschiene 120 angeordnet sein.

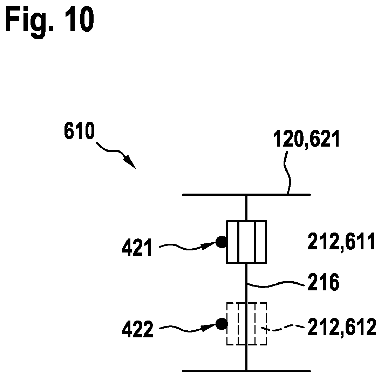

Die Rolle 212 ist bevorzugt fest an der Zwischenschiene 120 angeordnet. Insbesondere ist die Rolle 212 vorzugsweise horizontal an der Zwischenschiene 120 angeordnet. Illustrativ und vorzugsweise ist die Rolle 212 mittig zwischen der oberen Seite 201 und der unteren Seite 202 der Zwischenschiene 120 angeordnet. Jedoch kann die Rolle 212 auch außermittig angeordnet sein, wie beispielhaft bei Fig. 10 beschrieben. Darüber hinaus weist die Rolle 212 bevorzugt eine Aufnahme 219 zum Führen von zumindest einem Verbindungselement 220 auf.

Des Weiteren ist die Rolle 212 vorzugsweise über eine Drehachse 216 mit einer Antriebseinheit 240, z.B. einem Elektromotor 241, verbunden. Dabei ist die Antriebseinheit 240 als translatorische Bewegungseinheit ausgebildet, die nach dem Prinzip des umgekehrten Flaschenzugs arbeitet, d. h. mit doppelter Kraft und dem halben Verfahrweg wird die Teleskopschiene 100 von Fig. 1 komplett ausgefahren bzw. von der zusammengefahrenen Position in die ausgefahrene Position bewegt. Somit kann im Vergleich zum Stand der Technik vorteilhafterweise eine Bauraumreduzierung ermöglicht werden.

Die Drehachse 216 ist dabei bevorzugt in einer Ausnehmung 215 der Zwischenschiene 120 angeordnet bzw. gelagert. Die Ausnehmung 215 ist vorzugsweise an der oberen und unteren Seite 201, 202 der Zwischenschiene 120 ausgebildet.

Darüber hinaus ist die Drehachse 216 vorzugsweise mit einem Antriebselement 242 der Antriebseinheit 240 verbunden. Bevorzugt ist das Rotationsübertragungselement 211 mit der Drehachse 216 drehverbunden. Darüber hinaus ist die Rolle 212 vorzugsweise mittelbar mit der Zwischenschiene 120 verbunden. Dabei wird ein Formschluss ausgebildet.

Es wird jedoch darauf hingewiesen, dass das Lagerelement 213 auch in der Aufnahme 215 angeordnet sein kann. Dabei ist die Rolle 212 direkt mit der Drehachse 216 verbunden.

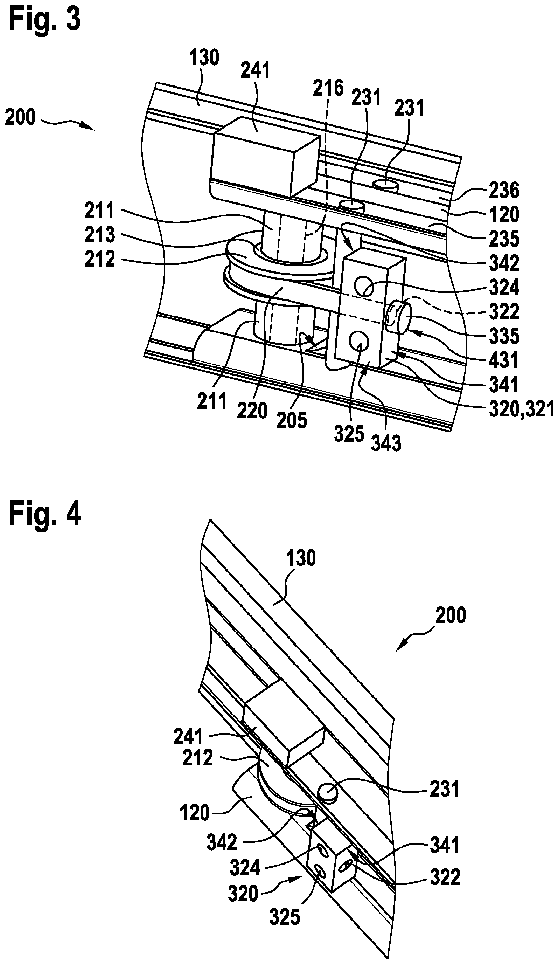

Fig. 3 zeigt den Ausschnitt 200 von Fig. 1 und Fig. 2, zwecks Einfachheit und Übersichtlichkeit jedoch ohne die erste Führungsschiene 110. Dabei verdeutlicht Fig. 3 Mittel zur Befestigung des Verbindungselements 220, bzw. eines Endes 431 des Verbindungselements 220, an der hier nicht dargestellten ersten Führungsschiene 110.

Bevorzugt ist ein Ende 431 des Verbindungselements 220 über zumindest ein zugeordnetes Befestigungselement 320 an der jeweils zugeordneten Führungsschiene 110, 130 befestigt. Das zumindest eine zugeordnete Befestigungselement 320 weist vorzugsweise einen rechteckigen Grundkörper 321 auf.

Bevorzugt ist das zumindest eine zugeordnete Befestigungselement 320 an einer der Zwischenschiene 120 zugewandten Längsseite 299 (s. Fig.2) der ersten und/oder zweiten Führungsschiene 110, 130 angeordnet. Dabei liegt eine dem zumindest einen Befestigungselement 320 zugeordnete Anlagefläche 343 an der jeweiligen Längsseite 299 der jeweiligen Führungsschiene 110, 130 an.

Vorzugsweise ist das zumindest eine zugeordnete Befestigungselement 320 an der ersten und/oder zweiten Führungsschiene 110, 130 angeschraubt. Hierfür weist das zumindest eine Befestigungselement 320 mindestens eine, bevorzugt zwei Ausnehmungen 324, 325 zur Anordnung eines Schraubelements auf. Bevorzugt sind die Ausnehmungen 324, 325 als Sacklochbohrungen ausgebildet. Es wird jedoch darauf hingewiesen, dass das zumindest eine Befestigungselement 320 auch auf eine beliebig andere Art und Weise an der jeweiligen Führungsschiene 110, 130 angeordnet werden kann. So kann das zumindest eine Befestigungselement 320 beispielhaft auch durch eine Klebeverbindung an der jeweiligen Führungsschiene 110, 130 angeordnet sein. Darüber hinaus kann das zumindest eine Befestigungselement 320 auch einstückig mit der jeweiligen Führungsschiene ausgebildet sein.

Illustrativ weist das Befestigungselement 320 ein erstes und zweites axiales Ende 341, 342 auf. Dabei ist das erste axiale Ende 341 dem ersten Ende 101 (s. Fig.1) der Teleskopschiene 100 von Fig. 1 zugewandt angeordnet, und das zweite axiale Ende 342 ist dem zweiten Ende 102 (s. Fig.1) der Teleskopschiene 100 zugewandt angeordnet. Bevorzugt weist das Befestigungselement 320 in axialer Richtung eine vorzugsweise als Durchgangsbohrung ausgebildete Ausnehmung 322 auf. Die Ausnehmung 322 ist vorzugsweise zur abschnittsweisen Aufnahme des Verbindungselements 220 ausgebildet, insbesondere zur abschnittsweisen Aufnahme eines Endes 431 des Verbindungselements 220.

In der in Fig. 3 gezeigten, ausgefahrenen Position der Teleskopschiene 100 liegt illustrativ das zweite axiale Ende 342 des Befestigungselements 320 abschnittsweise an dem Stift 231 an, der in der ersten Laufbahn 235 angeordnet ist. Darüber hinaus liegt bevorzugt ein Blockierelement 335 des Verbindungselements 220 am ersten Ende 341 des Befestigungselements 320 an.

Das Blockierelement 335 weist vorzugsweise einen größeren Grundkörper auf, als die Ausnehmung 322 des Befestigungselements 320. Dabei ist das Blockierelement 335 bevorzugt dazu ausgebildet, das Verbindungselement 220 am Befestigungselement 320 zu fixieren. Vorzugsweise ist das Blockierelement 335 an dem Ende 431 des Verbindungselements 220 angeordnet, insbesondere aufgepresst.

Illustrativ ist die Ausnehmung 322 in horizontaler Richtung des Befestigungselements 320 zwischen den Ausnehmungen 324, 325 angeordnet. Es wird jedoch darauf hingewiesen, dass die Ausnehmung 322 auch außermittig angeordnet werden kann. Insbesondere ist die Ausnehmung 322 analog zur Position der Rolle 212 angeordnet.

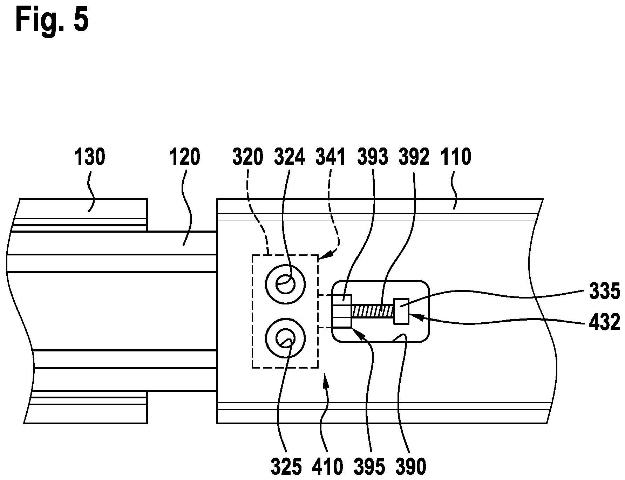

Es wird darauf hingewiesen, dass auch lediglich ein Befestigungselement 320 (und 410 in Fig. 5) an einer Führungsschiene 110, 130 angeordnet sein kann. Dabei kann das Befestigungselement 320 (und 410 in Fig. 5) derart ausgebildet sein, dass eine feste Anordnung des Verbindungselements 220 sowie einer Spannvorrichtung (395 in Fig. 5) ermöglicht werden kann.

Fig. 4 zeigt den Ausschnitt 200 von Fig. 3, zwecks Einfachheit und Übersichtlichkeit jedoch ohne das Verbindungselement 220. Dabei verdeutlicht Fig. 4 die Anordnung des Befestigungselements 320 an dem Stift 231 in der ausgefahrenen Position der Teleskopschiene 100 von Fig. 1. Hierbei zeigt Fig. 4 die Anordnung der Ausnehmung 322, die bevorzugt mittig zur Ausnehmung 324, 325 angeordnet ist.

Fig. 5 zeigt das zweite axiale Ende der Führungsschiene 110 von Fig. 1, wobei dem Befestigungselement 320 von Fig. 3 bevorzugt eine Spannvorrichtung 395 zugeordnet ist. Die Spannvorrichtung 395 ist zum manuellen Spannen des ersten und/oder zweiten Verbindungselements 220 von Fig. 3 ausgebildet. Das Befestigungselement 320 und die Spannvorrichtung 395 bilden dabei vorzugsweise eine Befestigungseinheit 410 aus.

Bevorzugt weist die Führungsschiene 110 im Bereich der Spannvorrichtung 395 eine Ausnehmung 390 zum Bedienen der Spannvorrichtung 395 auf. Analog zum ersten Ende 431 von Fig. 3 des Verbindungselements 220 weist ein zweites Ende 432 exemplarisch das Blockierelement 335 auf.

Der Spannvorrichtung 395 ist vorzugsweise eine Gewindehülse 392 zugeordnet, die bevorzugt auf einem Außenumfang des Verbindungselements 220 angeordnet ist. Zum Spannen der Spannvorrichtung 395 bzw. des Verbindungselements 220 ist vorzugsweise eine Spannmutter 393 vorgesehen, die bevorzugt auf dem Gewinde der Gewindehülse 392 angeordnet ist. Die Spannmutter 393 liegt dabei illustrativ an der Seite 341 des Befestigungselements 320 an.

Fig. 6 zeigt die Teleskopschiene 100 von Fig. 1 mit der ersten und zweiten Führungsschiene 110, 130 sowie der Zwischenschiene 120 in der zusammengefahrenen Position. Dabei verdeutlicht Fig. 6 die Anordnung des Befestigungselements 320 bzw. der Befestigungseinheit 410 von Fig. 5.

Illustrativ und vorzugsweise ist an der ersten Führungsschiene 110 ein erstes Ende 431 eines ersten Verbindungselements 421 sowie ein zweites Ende 432 eines zweiten Verbindungselements 422 jeweils über zugeordnete Befestigungselemente 320, 410 fixiert. Darüber hinaus ist an der zweiten Führungsschiene 130 bevorzugt ein zweites Ende 432 des ersten Verbindungselements 421 sowie ein erstes Ende 431 des zweiten Verbindungselements 422 über zugeordnete Befestigungselemente 320, 410 fixiert. Hierbei sind die zugeordneten Befestigungselemente 320, 410 vorzugsweise als Verfahrwegsbegrenzung der ersten und zweiten Führungsschiene 110, 130 an der Zwischenschiene 120 in der ausgefahrenen Position ausgebildet.

Bevorzugt sind die Befestigungselemente 320 mittig auf der ersten und zweiten Führungsschiene 110, 130 angeordnet. Darüber hinaus sind die Befestigungseinheiten 410 vorzugsweise jeweils an einem axialen Ende der ersten und zweiten Führungsschiene 110, 130 angeordnet.

Das Verbindungselement 421 ist illustrativ und vorzugsweise über das Befestigungselement 320 mittig an der ersten Führungsschiene 110 angeordnet und verläuft über eine Rolle 451 zur zweiten Führungsschiene 130. An der zweiten Führungsschiene 130 ist das Verbindungselement 421 über eine Befestigungseinheit 410 angeordnet.

Die Befestigungseinheit 410 ist dabei bevorzugt an der zweiten Führungsschiene 130 und dem zweiten Ende 102 der Teleskopschiene 100 zugewandt angeordnet. Des Weiteren ist vorzugsweise das zweite Verbindungselement 422 mit seinem zweiten Ende 432 an einem dem ersten Ende 101 der Teleskopschiene 100 zugewandten Ende der ersten Führungsschiene 110 befestigt.

Das Verbindungselement 422 wird vorzugsweise über eine Rolle 452 zur zweiten Führungsschiene 130 umgelenkt und ist dort bevorzugt über ein Befestigungselement 320 illustrativ mittig befestigt. Dabei ist das Verbindungselement 422 an seinem ersten axialen Ende 431 exemplarisch mittig an der zweiten Führungsschiene 130 angeordnet.

Illustrativ ist das zweite Ende 432 des Verbindungselements 421 an einem dem zweiten Ende 102 der Teleskopschiene 100 zugewandten zweiten Ende der Führungsschiene 442 angeordnet. Darüber hinaus ist das zweite Ende 432 des Verbindungselements 422 bevorzugt an einem dem ersten axialen Ende 101 der Teleskopschiene 100 zugewandten Ende 441 der ersten Führungsschiene 110 angeordnet.

Es wird jedoch darauf hingewiesen, dass die Befestigungseinheiten 410 der Verbindungselemente 421, 422 auch an einem gegenüberliegenden Ende der jeweiligen Führungsschiene 110, 130 angeordnet sein können. Des Weiteren können die Befestigungseinheiten 410 auch mittig an der jeweiligen Führungsschiene 110, 130 angeordnet sein, wobei die ersten Enden 431 der jeweiligen Verbindungselemente 421, 422 an einem axialen Ende der jeweils gegenüberliegenden Führungsschiene 110, 130 angeordnet sind.

Illustrativ sind in Fig. 6 zwei Verbindungselemente 220 bzw. 421, 422 gezeigt. Es wird jedoch darauf hingewiesen, dass die Teleskopschiene 100 auch mehr als zwei Verbindungselemente 220 aufweisen kann. So können die erste und zweite Führungsschiene 110, 130 z.B. auch jeweils über zwei Verbindungselemente 421, 422 verbunden sein.

Fig. 7 zeigt die Teleskopschiene 100 von Fig. 6 in der ausgefahrenen Position. Bei einem Bewegen von der zusammengefahrenen Position in die ausgefahrene Position der Teleskopschiene 100 ist vorzugsweise eine der Führungsschienen 110, 130 fest angeordnet und die Zwischenschiene 120 sowie die entsprechend andere der Führungsschienen 130, 110 können in axialer Richtung verschoben bzw. verfahren werden.

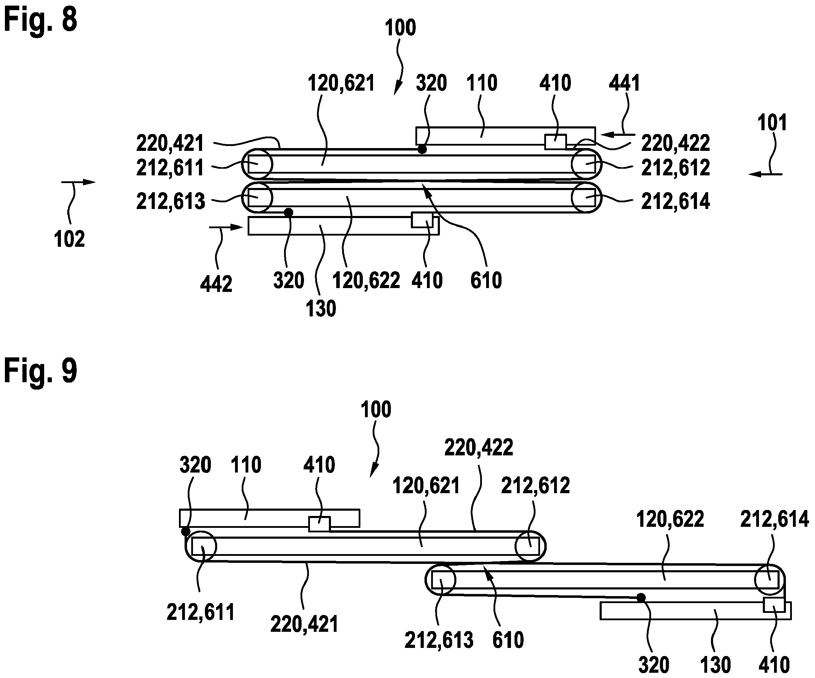

Fig. 8 zeigt die Teleskopschiene 100 von Fig. 1 mit der ersten und zweiten Führungsschiene 110, 130 sowie der Zwischenschiene 120. Im Gegensatz zu Fig. 1 weist die Zwischenschiene 120 nun jedoch zwei Schienenelemente 621, 622 auf, bzw. es sind zwei Zwischenschienen 621, 622 zur Ausbildung der Zwischenschiene 120 vorgesehen.

Analog zur Teleskopschiene 100 von Fig. 6 und Fig. 7 ist das Verbindungselement 422 über ein Befestigungselement 320 bevorzugt mittig an der ersten Führungsschiene 110 angeordnet. Das Verbindungselement 421 wird dabei vorzugsweise über ein dem zweiten Ende 102 der Teleskopschiene 100 zugewandtes Ende der Zwischenschiene 621 über eine Rolle 611 zu einem dem ersten Ende 101 der Teleskopschiene 100 zugewandten Ende der Zwischenschiene 622 umgeleitet bzw. an der Rolle 614 zur zweiten Führungsschiene 130 geführt. Das Verbindungselement 421 ist dabei bevorzugt an der zweiten Führungsschiene 130 über die Befestigungseinheit 410 befestigt.

Des Weiteren ist das Verbindungselement 422 bevorzugt an der ersten Führungsschiene 110 über die Befestigungseinheit 410 fixiert. Das Verbindungselement 422 wird vorzugsweise über eine Rolle 612, die an einem dem ersten Ende 101 der Teleskopschiene 100 zugewandten Ende der Zwischenschiene 621 angeordnet ist, sowie über eine Rolle 613, die an einem dem zweiten Ende 102 der Teleskopschiene 100 zugewandten Ende der Zwischenschiene 622 angeordnet ist, zur zweiten Führungsschiene 130 geleitet. An der zweiten Führungsschiene 130 ist wiederrum das Verbindungselement 320 fixiert.

Es wird darauf hingewiesen, dass in Fig. 8 zeichnerisch der Eindruck entsteht, dass sich die Verbindungselemente 421, 422 an einer Stelle 610 zwischen den Zwischenschienen 621, 622 kreuzen. Dies ist jedoch nichtzutreffend und wird in Fig. 10 näher beschrieben, wobei klargestellt wird, dass sich die Verbindungselemente 421, 422 nicht an der Stelle 610 kreuzen.

Fig. 9 zeigt die Teleskopschiene 100 von Fig. 8 in der ausgefahrenen Position. Analog zu Fig. 7 wird auch hier eine der Führungsschienen 110, 130 fest angeordnet, wobei sich bei einem Verfahren in die ausgefahrene Position die zwei Zwischenschienen 621, 622 sowie die entsprechend andere der Führungsschienen 130, 110 verschieben bzw. verfahren lassen. Die Teleskopschiene 100 von Fig. 9 kann wiederrum eine beliebige Anzahl von Zwischenschienen 120 aufweisen, wie beispielhaft in Fig. 8 beschrieben, wobei die Zwischenschienen 120 jeweils zwei Rollen 212 aufweisen.

Fig. 10 zeigt die Stelle 610 von Fig. 8. Bevorzugt wird an dieser Stelle 610 durch eine außermittige Anordnung der Rollen 611, 612 an der Zwischenschiene 621, sowie analog hierzu der Rollen 613, 614 von Fig. 8 an der Zwischenschiene 622 von Fig. 8, eine Kreuzung der Verbindungselemente 421, 422 vermieden.

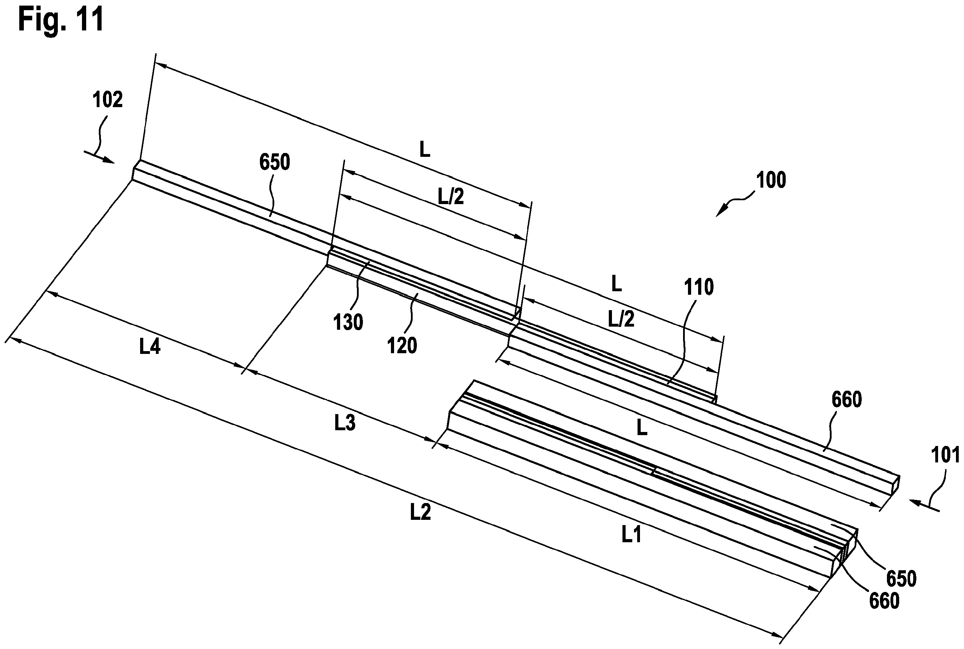

Fig. 11 zeigt die Teleskopschiene 100 von Fig. 1 in der zusammengefahrenen Position sowie in der ausgefahrenen Position. Bevorzugt weisen die erste und zweite Führungsschiene 110, 130 jeweils eine Länge L/2 auf und die Zwischenschiene 120 weist eine Länge L auf. Es wird jedoch darauf hingewiesen, dass die erst und zweite Führungsschiene 110, 130 auch die Länge L aufweisen können. Durch die Ausbildung der ersten und/oder zweiten Führungsschiene 110, 130 mit der Länge L/2, d. h. durch die Bereitstellung einer im Vergleich zur Zwischenschiene 120 verkürzten Führungsschiene 110, 130, kann eine kompakte Führungsschiene 110, 130 mit reduziertem Gewicht bereitgestellt werden.

Bevorzugt entspricht die Länge L einer ersten Länge L1 der Teleskopschiene 100 in der zusammengefahrenen Position. Die erste und zweite Führungsschiene 110, 130 weisen vorzugsweise jeweils ein Verbindungselement 650, 660 auf. Bevorzugt weisen die Verbindungselemente 650, 660 die Länge L auf. Gemäß einer Ausführungsform sind die Verbindungselemente 650, 660 als Platten ausgebildet. Dabei sind die Verbindungselemente 650, 660 derart an der ersten und zweiten Führungsschiene 110, 130 angeordnet, dass die Teleskopschiene in der ausgefahrenen Position eine Länge L2 aufweist, die zumindest annähernd der doppelten ersten Länge L1 entspricht. Bevorzugt entspricht ein relativer Verfahrweg L3 zwischen der ersten Führungsschiene 110 und der Zwischenschiene 120 sowie ein relativer Verfahrweg L4 zwischen der zweiten Führungsschiene 130 und der Zwischenschiene 120 zum Verfahren der Teleskopschiene 100 von der zusammengefahrenen Position in die ausgefahrene Position, oder umgekehrt, jeweils zumindest annähernd der Hälfte der ersten Länge L1.

Somit kann bei halbem relativem Auszugsweg der Zwischenschiene 120 über die Länge L3 und der zweiten Führungsschiene 130 über die Länge L4 ein komplettes Ausziehen der Teleskopschiene 100 bei einem Vollauszug auf die Länge L2 erfolgen. Dabei wird lediglich eine Längenänderung der Länge L1 auf die Länge L1 plus L3 plus L4 benötigt.

Fig. 12 zeigt die Zwischenschiene 120 mit den Wälzkörpern 118, 138. An jedem Ende 441, 442 der Zwischenschiene 120 befindet sich eine Rolle 212. Die Wälzkörper 118, 138 sind dabei in einem Wälzkörperschlitten 700 angeordnet. Hierbei ist jeweils ein Wälzkörperschlitten 700 auf einer Seitenfläche 798, 799 der Zwischenschiene 120 angeordnet und bevorzugt in den Laufbahnen 235, 236 (s. Fig. 2) der Zwischenschiene 120 geführt. Bevorzugt sind die Wälzkörperschlitten 700 mit der ersten und/oder zweiten Führungsschiene 110, 130 sowie mit einem Gegenstand, an dem die Teleskopschiene 100 angeordnet werden kann, verbunden. Hierbei können die Wälzkörperschlitten 700 über eine Schraubverbindung oder eine beliebig andere Verbindung, z.B. eine Schweißverbindung, Pressverbindung, Klebeverbindung, Formschlussverbindung, usw. mit der ersten und/oder zweiten Führungsschiene 110, 130 verbunden sein.

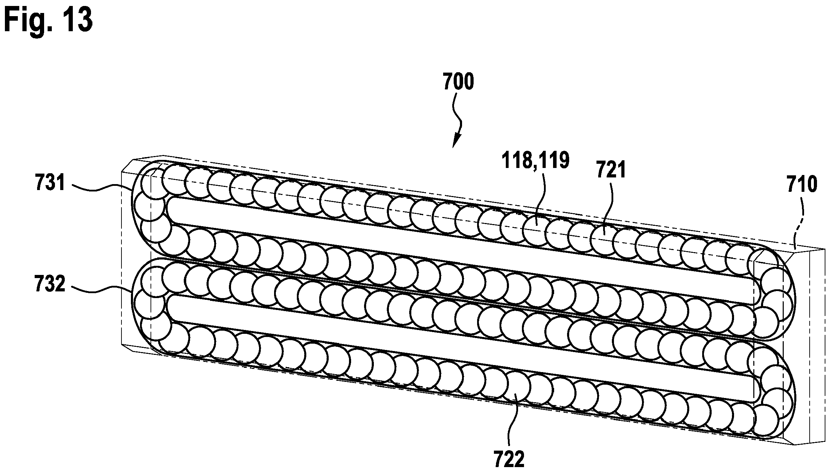

Fig. 13 zeigt den Wälzkörperschlitten 700 mit den Wälzkörpern 118 der Mehrzahl 119 von Wälzkörpern 118 von Fig. 12. Es wird jedoch darauf hingewiesen, dass in den Figuren 13 bis 16 die Wälzkörper 118 repräsentativ für die Wälzkörper 118, 138 am Wälzkörperschlitten 700 angeordnet sind. Der Wälzkörperschlitten 700 weist zumindest eine in sich geschlossene Umlaufbahn 731, 732 zum Führen der Wälzkörper 118 auf. Bevorzugt weist der Wälzkörperschlitten 700 einen Grundkörper 710 auf, wobei die zumindest eine Umlaufbahn 731, 732 im Grundkörper 710 angeordnet ist. Illustrativ ist eine erste und zweite Umlaufbahn 731, 732 im Grundkörper 710 angeordnet, wobei die erste Umlaufbahn 731 an einem illustrativ oberen Bereich des Grundkörpers 710 ausgebildet ist und die zweite Umlaufbahn 732 an einem illustrativ unteren Bereich des Grundkörpers 710 ausgebildet ist. Vorzugsweise ist die erste Umlaufbahn 731 zur Aufnahme einer ersten, illustrativ oberen Mehrzahl 721 von Wälzkörpern 118 ausgebildet und die zweite Umlaufbahn 732 ist zur Aufnahme einer zweiten, illustrativ unteren Mehrzahl 722 von Wälzkörpern 118 ausgebildet. Dabei sind die Wälzkörper 118 der Mehrzahl 721, 722 von Wälzkörpern 118 vorzugsweise nicht mit einander verbunden, d.h. sie bilden keine Wälzkörperkette aus.

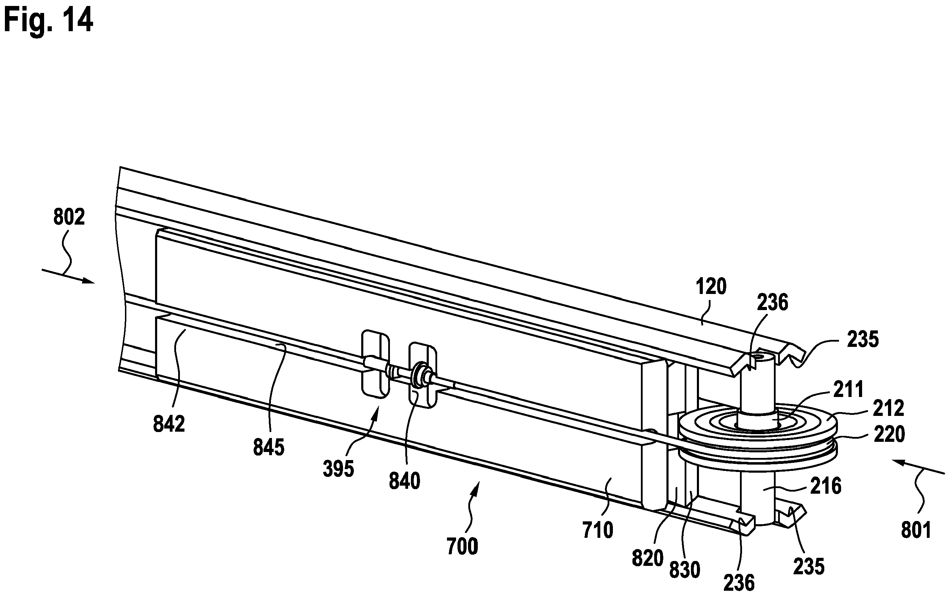

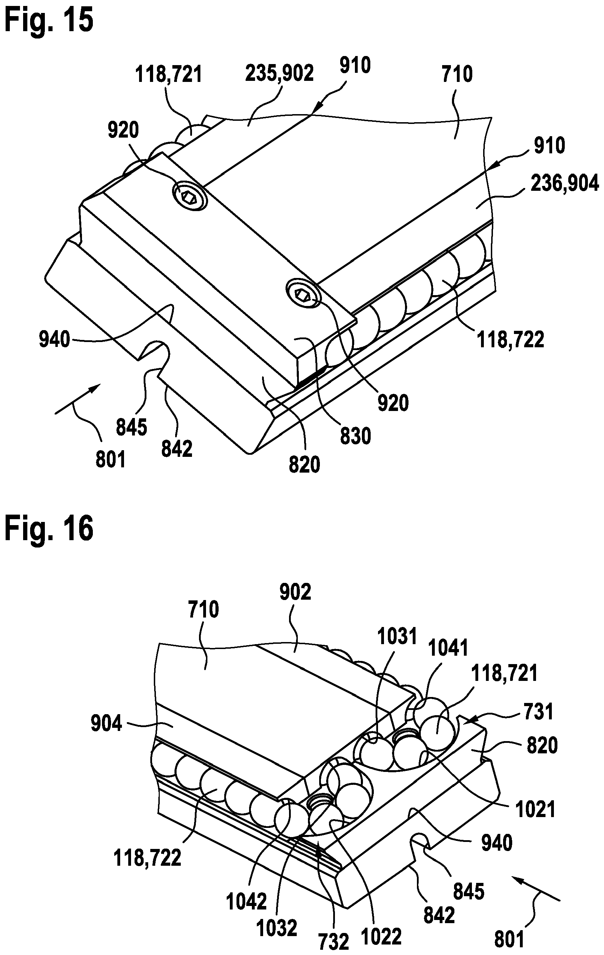

Fig. 14 zeigt die Zwischenschiene 120 mit dem Wälzkörperschlitten 700 von Fig. 12 und verdeutlicht die Anordnung des Wälzkörperschlittens 700 an der Zwischenschiene 120. Der Wälzkörperschlitten 700 ist dabei zur Führung an den illustrativ linken Laufbahnen 236 der Zwischenschiene 120 angeordnet. An seinen axialen Enden 801, 802 weist der Wälzkörperschlitten 700 bzw. der Grundkörper 710, jeweils ein Umlenkelement 820 zum Umlenken der Wälzkörper 118, 138 von einem Führungsabschnitt (1041, 1042 in Fig. 16) in einen Rückführungsabschnitt (1031, 1032 in Fig. 16), und umgekehrt, auf. Dem Umlenkelement 820 ist vorzugsweise ein Deckelelement 830 zugeordnet, durch das eine einfache Anordnung der Wälzkörper 118, 138 in den Umlaufbahnen 731, 732 von Fig. 13 ermöglicht wird. Hierbei sind die Umlenkelemente 820 mit den Deckelelementen 830 an einer der Zwischenschiene 120 zugewandten Seite des Wälzkörperschlittens 700 angeordnet.

Des Weiteren weist der Wälzkörperschlitten 700, insbesondere der Grundkörper 710, an seiner einer der ersten oder zweiten Führungsschiene 110, 130 zugewandten Seite, bzw. an seiner von der Zwischenschiene 120 abgewandten Seite, eine Befestigungsoberfläche 842 auf. Ausgehend von der Befestigungsoberfläche 842 ist vorzugsweise eine Längsnut 845 in den Grundkörper 710 eingebracht, die dazu ausgebildet ist, das Verbindungselement 220 sicher und geschützt zu führen. Des Weiteren ist an der Befestigungsoberfläche 842 ein Aufnahmebereich 840 zur Anordnung der Spannvorrichtung 395 vorgesehen. Alternativ kann die Befestigungsoberfläche 842 auch mit einem Steg versehen sein. Dabei kann vorzugsweise die erste und/oder zweite Führungsschiene 110, 130 eine dem Steg zugeordnete, komplementäre Form aufweisen, sodass eine sichere und robuste Anordnung erfolgen kann, die gleichzeitig bauraumsparend ist. Hierbei kann ein derartiger Steg einstückig mit dem Grundkörper 710 ausgebildet sein oder über eine beliebige Verbindung, z.B. Schraub- oder Klebeverbindung, an diesem angeordnet sein.

Fig. 15 zeigt den Wälzkörperschlitten 700 von Fig. 12 bis Fig. 14, insbesondere das erste Ende 801 des Grundkörpers 710 mit dem Umlenkelement 820 und dem Deckelelement 830. Dabei weist der Grundkörper 710 illustrativ an seinem ersten Ende 801, bevorzugt an beiden Enden 801, 802, einen Absatz 940 mit einer geringeren Höhe auf, in dem vorzugsweise das Umlenkelement 820 mit dem Deckelelement 830 angeordnet ist. Vorzugsweise sind das Umlenkelement 820 und das Deckelelement 830 über eine Schraubverbindung mit illustrativ zwei Schraubelementen 920 am Grundkörper 710 befestigt. Jedoch kann das Umlenkelement 820 auch einstückig mit dem Grundkörper 710 ausgebildet sein.

Des Weiteren weist der Wälzkörperschlitten 700 bevorzugt zumindest ein Laufbahnelement 902, 904 zum Führen der Wälzkörper 118 der illustrativ oberen und unteren Mehrzahl 721, 722 von Wälzkörpern 118 an der Zwischenschiene 120 auf. Illustrativ und vorzugsweise sind die Laufbahnelemente 902, 904 über eine Nut-Feder-Verbindung 910 am Grundkörper 710 des Wälzkörperschlittens 700 befestigt. Jedoch können die Laufbahnelemente 902, 904 auch einstückig mit dem Grundkörper 710 ausgebildet sein.

Fig. 16 zeigt den Wälzkörperschlitten 700 von Fig. 15 ohne das Deckelelement 830. Dabei verdeutlicht Fig. 16 die in sich geschlossenen Umlaufbahnen 731, 732 des Wälzkörperschlittens 700. Die Umlaufbahnen 731, 732 weisen vorzugsweise jeweils einen Rückführungsabschnitt 1031, 1032 und einen Führungsabschnitt 1041, 1042 auf. Dabei sind die Wälzkörper 118 der Mehrzahl 721, 722 von Wälzkörpern 118 am Führungsabschnitt 1041, 1042 an der jeweiligen Laufbahn 235, 236 der Zwischenschiene 120 geführt und der Rückführungsabschnitt 1031, 1032 ist bevorzugt innerhalb des Wälzkörperschlittens 700 angeordnet. Des Weiteren weist der Grundkörper 710 an seinen axialen Enden 801, 802 jeweils das Umlenkelement 820 auf, wobei das Umlenkelement 820 einen gekrümmten Laufbahnabschnitt 1021, 1022 zum Umlenken der Wälzkörper 118 vom Führungsabschnitt 1041, 1042 in den Rückführungsabschnitt 1031, 1032, und umgekehrt, aufweist. Hierbei weist das Laufbahnelement 902, 904 den Führungsabschnitt 1041, 1042 auf.

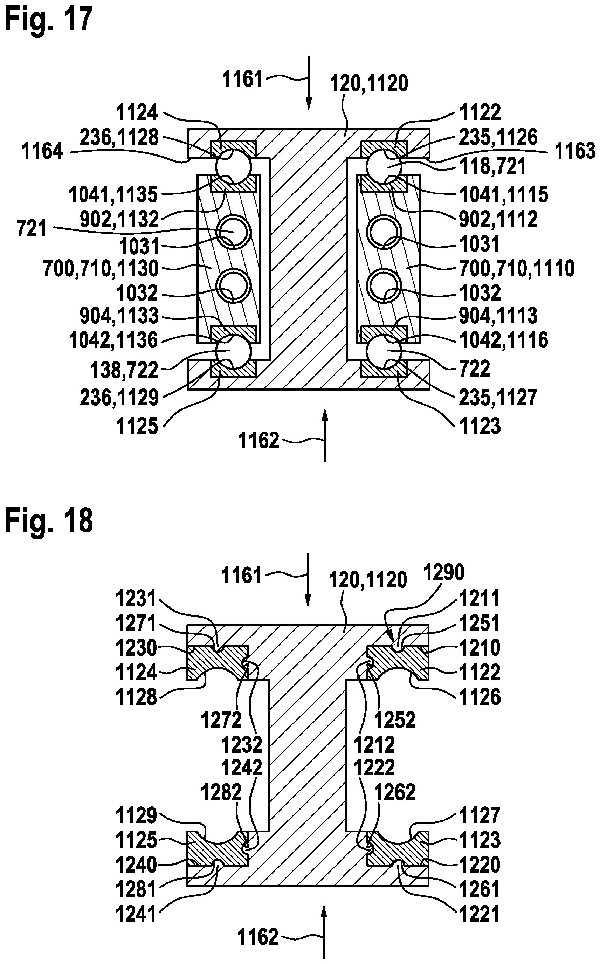

Fig. 17 zeigt die Zwischenschiene 120 von Fig. 14 mit zwei Wälzkörperschlitten 700. Die Zwischenschiene 120 weist dabei vorzugsweise einen Doppel-T-förmigen Grundkörper 1120 auf. Der Grundkörper 1120 weist bevorzugt ein illustrativ oberes Ende 1161 und ein unteres Ende 1162, sowie eine illustrativ rechte Aufnahme 1163 und eine linke Aufnahme 1164 auf. Dabei ist jeweils ein Wälzkörperschlitten 700 zumindest abschnittsweise in einer zugeordneten Aufnahme 1163, 1164 angeordnet. Es wird darauf hingewiesen, dass der Zwischenschiene 120 auch lediglich ein Wälzkörperschlitten 700 oder mehr als zwei Wälzkörperschlitten 700 zugeordnet sein können. Bei einer Ausbildung mit mehr als zwei Wälzkörperschlitten 700 können z.B. jeweils zwei Wälzkörperschlitten 700 übereinander angeordnet sein.

Vorzugsweise ist ein Wälzkörperschlitten 1110 der Aufnahme 1163 zugeordnet und ein Wälzkörperschlitten 1130 ist der Aufnahme 1164 zugeordnet. Des Weiteren sind im Bereich der Aufnahmen 1163, 1164 bevorzugt die ersten und zweiten Laufbahnen 235, 236 bzw. 1126, 1127, 1128, 1129 angeordnet. Hierbei sind bevorzugt die Laufbahnen 1126 und 1128 in der jeweiligen Aufnahme 1163, 1164 dem oberen Ende 1161 zugewandt angeordnet und die Laufbahnen 1127 und 1129 sind in der jeweiligen Aufnahme 1163, 1164 dem unteren Ende 1162 zugewandt angeordnet.

Die Laufbahnen 235, 236 bzw. 1126, 1127, 1128, 1129 der Zwischenschiene 120 sind dabei bevorzugt den Führungsabschnitten 1041, 1042 bzw. dritten Laufbahnen 1115, 1116, 1135, 1136 der jeweiligen Wälzkörperschlitten 700 zugewandt angeordnet. Dabei bildet der Führungsabschnitt 1041 des Wälzkörperschlittens 1110 vorzugsweise die Laufbahn 1115 aus und der gegenüberliegende Führungsabschnitt 1042 bildet die Laufbahn 1116 aus. Dabei ist bevorzugt die Laufbahn 1126 der Zwischenschiene 120 der Laufbahn 1115 des Wälzkörperschlittens 1110 zugewandt angeordnet und die Laufbahn 1127 der Zwischenschiene 120 ist der Laufbahn 1115 des Wälzkörperschlittens 1110 zugewandt angeordnet. Des Weiteren bildet bevorzugt der Führungsabschnitt 1041 des Wälzkörperschlittens 1130 die Laufbahn 1135 aus und der gegenüberliegende Führungsabschnitt 1042 bildet die Laufbahn 1136 aus. Dabei ist vorzugsweise die Laufbahn 1128 der Zwischenschiene 120 der Laufbahn 1135 des Wälzkörperschlittens 1130 zugewandt angeordnet und die Laufbahn 1129 der Zwischenschiene 120 ist der Laufbahn 1136 des Wälzkörperschlittens 1130 zugewandt angeordnet.

Der Grundkörper 710 der Wälzkörperschlitten 700 bzw. 1110, 1130 und/oder der Grundkörper 1120 der Zwischenschiene 120 weisen vorzugsweise mindestens ein Laufbahnelement 1122, 1123, 1124, 1125, 902, 904 zur Ausbildung der ersten, zweiten oder dritten Laufbahn 1126, 1127, 1128, 1129, 1041, 1042 auf. Dabei ist das mindestens eine Laufbahnelement 1122, 1123, 1124, 1125 bevorzugt dem Grundkörper 1120 der Zwischenschiene 120 zugeordnet. Des Weiteren sind vorzugsweise Laufbahnelemente 1112, 1113 dem Grundkörper 710 des Wälzkörperschlitten 1110 zugeordnet und die Laufbahnelemente 1132, 1133 sind dem Grundkörper 710 des Wälzkörperschlittens 1130 zugeordnet. Dabei bildet das Laufbahnelement 1122 der Zwischenschiene 120 vorzugsweise die Laufbahn 1126 aus, das Laufbahnelement 1123 die Laufbahn 1127, das Laufbahnelement 1124 die Laufbahn 1128 und das Laufbahnelement 1125 die Laufbahn 1129. Darüber hinaus bildet das Laufbahnelement 1112 die Laufbahn 1115 aus und das Laufbahnelement 1113 bildet die Laufbahn 1116 des Wälzkörperschlittens 1110 aus. Des Weiteren bildet das Laufbahnelement 1132 die Laufbahn 1135 aus und das Laufbahnelement 1133 bildet die Laufbahn 1136 des Wälzkörperschlittens 1130 aus.

Gemäß einer Ausführungsform weist der Grundkörper 710, 1120 ein erstes Material auf und das mindestens eine Laufbahnelement 1122, 1123, 1124, 1125, 902, 904 weist zumindest abschnittsweise ein zweites Material auf. Vorzugsweise ist das erste Material Aluminium und das zweite Material ist Stahl. Hierbei weist das mindestens eine Laufbahnelement 1122, 1123, 1124, 1125, 902, 904 vorzugsweise Vollmaterial auf. Das mindestens eine Laufbahnelement 1122, 1123, 1124, 1125, 902, 904 ist dabei bevorzugt durch Kaltziehen und/oder Fräsen ausgebildet.

Bevorzugt ist die erste, zweite und/oder dritte Laufbahn 1126, 1127, 1128, 1129, 1041, 1042 derart ausgebildet, dass zwischen dem Wälzkörper 118, 138 und der Laufbahn 1126, 1127, 1128, 1129, 1041, 1042 zumindest ein 2-Punkt-Kontakt, bevorzugt ein 3-Punkt-Kontakt besteht. Vorzugsweise wird ein 3-Punkt-Kontakt oder ein 4-Punkt-Kontakt der Wälzkörper 118, 138 mit der jeweiligen Laufbahn 1126, 1127, 1128, 1129, 1041, 1042 ausgebildet.

Fig. 18 zeigt die Zwischenschiene 120 von Fig. 17 mit ihren vorzugsweise vier Laufbahnelementen 1122-1125 zur Ausbildung der Laufbahnen 1126-1129. Dabei verdeutlicht Fig. 18 die Anbindung der Laufbahnelemente 1122-1125 an den Grundkörper 1120 der Zwischenschiene 120. Zur Anordnung der Laufbahnelemente 1122-1125 am Grundkörper 1120 weist der Grundkörper 1120 bevorzugt Aufnahmen 1210, 1220, 1230, 1240 auf. Dabei ist vorzugsweise das Laufbahnelement 1122 in der Aufnahme 1210 angeordnet, das Laufbahnelement 1123 ist in der Aufnahme 1220 angeordnet, das Laufbahnelement 1124 ist in der Aufnahme 1230 angeordnet und das Laufbahnelement 1125 ist in der Aufnahme 1240 angeordnet.

Bevorzugt sind die Laufbahnelemente 1122, 1123, 1124, 1125 in der jeweils zugeordneten Aufnahme 1210-1240 über eine Nut-Feder-Verbindung 1290 am Grundkörper 1120 befestigt. Zur Ausbildung der Nut-Feder-Verbindung 1290 weist der Grundkörper 1120, vorzugsweise die Aufnahmen 1210-1240, Stege 1211, 1212, 1221, 1222, 1231, 1232, 1241, 1242 auf und die Laufbahnelemente 1122-1125 weisen den Stegen zugeordnete Nuten 1251, 1252, 1261, 1262, 1271, 1272, 1281, 1282 auf. Bevorzugt ist eine Nut 1251, 1261, 1271, 1281 der Laufbahn 1126, 1127, 1128, 1129 gegenüberliegend angeordnet und eine Nut 1252, 1262, 1272, 1282 ist an einer dem Grundkörper 1120 zugewandten Seitenfläche des Laufbahnelements 1122-1125 angeordnet. Illustrativ sind die Nuten 1251, 1252 dem Laufbahnelement 1122 zugeordnet, die Nuten 1261, 1262 dem Laufbahnelement 1123, die Nuten 1271, 1272 dem Laufbahnelement 1124 und die Nuten 1281, 1282 dem Laufbahnelement 1125. Dabei sind beispielhaft die Stege 1211, 1212 den Nuten 1251, 1252 des Laufbahnelements 1122 zugeordnet, die Stege 1221, 1222 den Nuten 1261, 1262 des Laufbahnelements 1123, die Stege 1213, 1232 den Nuten 1271, 1272 des Laufbahnelements 1124 und die Stege 1241, 1242 den Nuten 1281, 1282 des Laufbahnelements 1125.

Es wird darauf hingewiesen, dass die Ausgestaltung der Laufbahnelemente 1122-1125 lediglich beispielhaften Charakter hat und nicht als Einschränkung der Erfindung zu sehen ist. So können die Laufbahnelemente 1122-1125 eine beliebig andere Form aufweisen, z.B. ein Vieleck. Des Weiteren können die Nuten an einer beliebig anderen Stelle des Laufbahnelements 1122-1125 angeordnet sein. Darüber hinaus können die Laufbahnelemente 1122-1125 auch die Stege aufweise und die Zwischenschiene 120 kann mit Nuten versehen sein. Bevorzugt sind die Stege und Nuten entlang einer gesamten Länge des Grundkörpers und/oder der Laufbahnelemente ausgebildet. Jedoch können die Stege und Nuten auch nur abschnittsweise ausgebildet sein.

Vorzugsweise sind die Laufbahnelemente 1122, 1123, 1124, 1125 der Zwischenschiene 120 über die Nut-Feder-Verbindung 1290 am zugeordneten Grundkörper 1120 angeordnet und die Laufbahnelemente 902, 904 der Wälzkörperschlitten 700 sind über die Nut-Feder-Verbindung 910 am zugeordneten Grundkörper 710 befestigt.

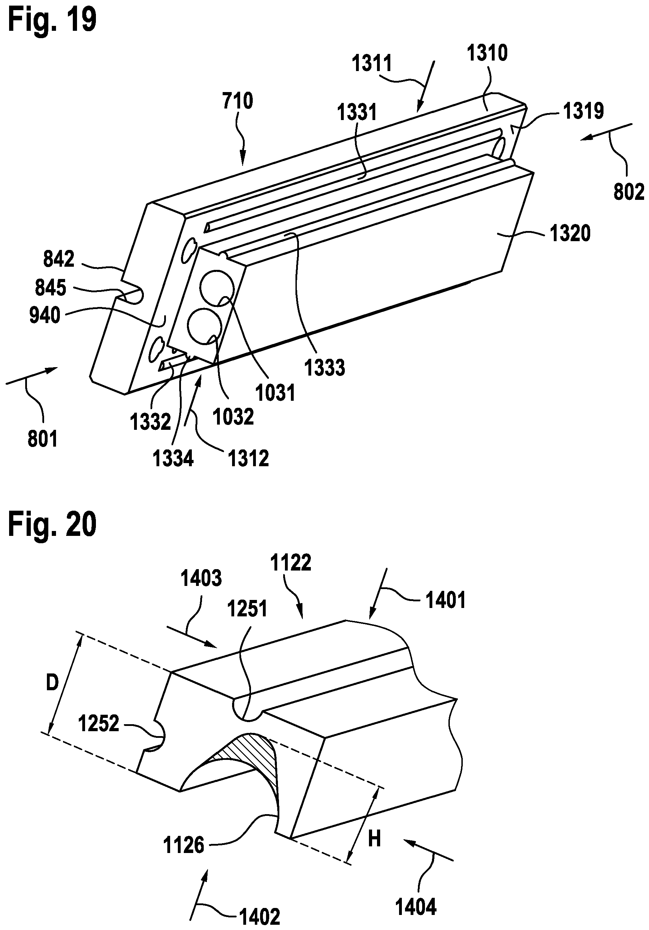

Fig. 19 zeigt den Grundkörper 710 des Wälzkörperschlittens 700 der Figuren 12 bis 17. Dabei werden ein Abschnitt 1310 und ein Führungsabschnitt 1320 des Grundkörpers 710 verdeutlicht. Dem Abschnitt 1310 ist dabei die Befestigungsoberfläche 842 zugeordnet, wobei auf der von der Befestigungsoberfläche 842 abgewandten Seite des Abschnitts 1310 der Führungsabschnitt 1320 angeordnet ist. Zur Ausbildung der bevorzugten Nut-Feder-Verbindung 910 von Fig. 15 zwischen dem Grundkörper 710 und den Laufbahnelementen 902, 904 von Fig. 15 weisen der Abschnitt 1310 und der Führungsabschnitt 1320 jeweils zumindest einen Steg 1331, 1332, 1333, 1334 auf.

Dabei sind die Stege 1331, 1332 des Abschnitts 1310 an einer von der Befestigungsoberfläche 842 abgewandten Seitenfläche 1319 des Abschnitts 1310 angeordnet. Bevorzugt sind die Stege im Bereich eines dem illustrativ oberen und unteren Ende 1311, 1312 des Grundkörpers 710 zugewandten Ende angeordnet. Die Stege 1333, 1334 sind jeweils an einem dem illustrativ oberen und unteren Ende 1311, 1312 zugewandten Bereich des Führungsabschnitts 1320 angeordnet. Der Führungsabschnitt 1320 ist bevorzugt mittig am Abschnitt 1310 angeordnet. Der Führungsabschnitt 1320 weist bevorzugt die Rückführungsabschnitte 1031, 1032 auf. Dabei sind der Abschnitt 1310 und der Führungsabschnitt 1320 bevorzugt einstückig ausgebildet.

Des Weiteren verdeutlicht Fig. 19 die an den axialen Enden 801, 802 ausgebildeten Absätze 940 zur Anordnung der Umlenkelemente 820 von Fig. 14 und der Deckelelemente 830 von Fig. 14. Bevorzugt ist der Grundkörper 710 als Frästeil ausgebildet.

Fig. 20 zeigt einen Abschnitt des Laufbahnelements 1122 der Zwischenschiene 120, wobei das Laufbahnelement 1122 stellvertretend für die Laufbahnelemente 1122, 1123, 1124, 1125 der Zwischenschiene 120 sowie der Laufbahnelemente 902, 904 bzw. 1112, 1113, 1132, 1133 der Wälzkörperschlitten 700 (s. Fig. 17) beschrieben wird. Das Laufbahnelement 1122 weist vorzugsweise einen zylindrischen Grundkörper mit einer illustrativ dargestellten Oberseite 1401, einer Unterseite 1402, einer illustrativ linken Seitenfläche 1403 und einer illustrativ rechten Seitenfläche 1404 auf. Dabei weist eine Seite, illustrativ die Unterseite 1402, die Laufbahn 1126 zum Führen der Wälzkörper 118, 138 auf. Des Weiteren weisen zwei Seiten, illustrativ die Oberseite 1401 und die linke Seitenfläche 1403, jeweils die Nut 1252, 1251 zur Anordnung der Stege 1212, 1211 auf. Die Laufbahnelemente 902, 904 bzw. 1112, 1113, 1132, 1133 der Wälzkörperschlitten 700 sind über die Nuten 1251, 1252 an den Stegen 1331, 1333 bzw. 1332, 1334 von Fig. 19 anordenbar.

Darüber hinaus weist das Laufbahnelement 1122 illustrativ eine Dicke D auf. Bevorzugt ist die Dicke D des Laufbahnelements 1122 größer als eine maximale Eindringtiefe H einer Hertzschen Pressung. Hierbei ist die maximale Eindringtiefe H einer Hertzschen Pressung die Tiefe der maximalen orthogonalen Schubspannung, die sich aus der Hertzschen Pressung ergibt.

## Patentansprüche

1. Teleskopschiene (100) mit einer ersten und einer zweiten Führungsschiene (110, 130) und mit einer Zwischenschiene (120), wobei die erste Führungsschiene (110) an einer ersten Laufbahn (235; 1126, 1127) der Zwischenschiene (120) geführt ist und die zweite Führungsschiene (130) an einer zweiten, zur ersten Laufbahn (235; 1126, 1127) parallel verlaufenden Laufbahn (236; 1128, 1129) der Zwischenschiene (120) geführt ist, wobei die erste und zweite Führungsschiene (110, 130) jeweils über Wälzkörper (118, 138) an der Zwischenschiene (120) geführt sind, **dadurch gekennzeichnet, dass** zumindest ein Wälzkörperschlitten (700) vorgesehen ist, der mit der ersten oder zweiten Führungsschiene (110, 130) verbunden ist und dazu ausgebildet ist, die erste oder zweite Führungsschiene (110, 130) über die Wälzkörper (118, 138) an der Zwischenschiene (120) zu führen, wobei der Wälzkörperschlitten (700; 1110, 1130) eine dritte Laufbahn (1041, 1042) aufweist, die der ersten oder zweiten Laufbahn (235, 236; 1126, 1127, 1128, 1129) der Zwischenschiene (120) zugewandt angeordnet ist, wobei zumindest der Wälzkörperschlitten (700) oder die Zwischenschiene (120) einen zugeordneten Grundkörper (710, 1120) aufweist, wobei an dem zugeordneten Grundkörper (710, 1120) mindestens ein Laufbahnelement (1122, 1123, 1124, 1125, 902, 904) zur Ausbildung der ersten, zweiten oder dritten Laufbahn (1126, 1127, 1128, 1129, 1041, 1042) befestigt ist, und wobei der Grundkörper (710, 1120) ein erstes Material aufweist und das Laufbahnelement (1122, 1123, 1124, 1125, 902, 904) zumindest abschnittsweise ein zweites Material aufweist.

2. Teleskopschiene nach Anspruch 1, **dadurch gekennzeichnet, dass** das Laufbahnelement (1122, 1123, 1124, 1125, 902, 904) über eine Nut-Feder-Verbindung (910; 1290) am Grundkörper (710, 1120) befestigt ist.

3. Teleskopschiene nach Anspruch 1 oder 2, **dadurch gekennzeichnet, dass** das erste Material Aluminium ist und das zweite Material Stahl ist.

4. Teleskopschiene nach einem der vorhergehenden Ansprüche, **dadurch gekennzeichnet, dass** das Laufbahnelement (1122, 1123, 1124, 1125, 902, 904) Vollmaterial aufweist und durch Kaltziehen und/oder Fräsen ausgebildet ist.

5. Teleskopschiene nach einem der vorhergehenden Ansprüche, **dadurch gekennzeichnet, dass** die erste, zweite und/oder dritte Laufbahn (1126, 1127,1128, 1129, 1041, 1042) derart ausgebildet ist, dass zwischen dem Wälzkörper (118, 138) und der Laufbahn (1126, 1127, 1128, 1129, 1041, 1042) zumindest ein 2-Punkt-Kontakt, bevorzugt ein 3-Punkt-Kontakt besteht.

6. Teleskopschiene nach einem der vorhergehenden Ansprüche, **dadurch gekennzeichnet, dass** eine Dicke (D) des Laufbahnelements (1122, 1123, 1124, 1125, 902, 904) größer als eine maximale Eindringtiefe (H) einer Hertzschen Pressung ist.

7. Teleskopschiene nach einem der vorhergehenden Ansprüche, **dadurch gekennzeichnet, dass** die erste Führungsschiene (110) über eine erste Mehrzahl (119) von Wälzkörpern (118) an der Zwischenschiene (120) geführt ist und die zweite Führungsschiene (130) über eine zweite Mehrzahl (139) von Wälzkörpern (138) an der Zwischenschiene (120) geführt ist.

8. Teleskopschiene nach Anspruch 7, **dadurch gekennzeichnet, dass** der zumindest eine Wälzkörperschlitten (700) zumindest eine in sich geschlossene Umlaufbahn (731, 732) zum Führen der Wälzkörper (108) aufweist, wobei die in sich geschlossenen Umlaufbahnen (731, 732) jeweils einen Rückführungsabschnitt (1031, 1032) und einen Führungsabschnitt (1041, 1042) aufweisen, wobei die Wälzkörper (118) am Führungsabschnitt (1041, 1042) an der jeweiligen Laufbahn (235, 236) der Zwischenschiene (120) geführt sind und der Rückführungsabschnitt (1031, 1032) innerhalb des Wälzkörperschlittens (700) angeordnet ist.

9. Teleskopschiene nach einem der vorhergehenden Ansprüche, **dadurch gekennzeichnet, dass** der Wälzkörperschlitten (700) einen Grundkörper (710) aufweist, der an seinen axialen Enden (801, 802) jeweils ein Umlenkelement (820) mit einem gekrümmten Laufbahnabschnitt (1021, 1022) zum Umlenken der Wälzkörper (108) vom Führungsabschnitt (1041, 1042) in den Rückführungsabschnitt (1031, 1032), und umgekehrt, aufweist.

10. Teleskopschiene nach einem der vorhergehenden Ansprüche, **dadurch gekennzeichnet, dass** die erste und/oder zweite Führungsschiene (110, 130) an der Zwischenschiene (120) zwangsgeführt sind, wobei die erste und zweite Führungsschiene (110, 130) sowie die Zwischenschiene (120) über mindestens zwei längliche Verbindungselemente (220; 421, 422) bei einem Bewegen von einer zusammengefahrenen Position in eine ausgefahrene Position, oder umgekehrt, synchronisiert sind, wobei die Zwischenschiene (120) an jedem ihrer Enden (441, 442) zumindest eine Rolle (212) zum Umlenken des jeweiligen Verbindungselements (220) aufweist.

11. Teleskopschiene nach Anspruch 10, **dadurch gekennzeichnet, dass** die Verbindungselemente (421, 422) an der jeweiligen Führungsschiene (110, 130) jeweils über zugeordnete Befestigungselemente (320, 410) fixiert sind, wobei die zugeordneten Befestigungselemente (320, 410) als Verfahrwegsbegrenzung der ersten und zweiten Führungsschiene (110, 130) an der Zwischenschiene (120) in der ausgefahrenen Position ausgebildet sind.

12. Teleskopschiene nach Anspruch 10 oder 11, **dadurch gekennzeichnet, dass** den Verbindungselementen (421, 422) jeweils eine Spannvorrichtung (395) zum manuellen Spannen des jeweiligen Verbindungselements (220) zugeordnet ist, wobei der zumindest eine Wälzkörperschlitten (700) einen Aufnahmebereich (840) zur Anordnung der Spannvorrichtung (395) aufweist.

13. Teleskopschiene nach einem der Ansprüche 10 bis 12, **dadurch gekennzeichnet, dass** die Verbindungselemente (220) nach Art eines Seils, eines Riemens und/oder einer Kette ausgebildet sind und dazu ausgebildet sind, Druckkräfte und/oder Zugkräfte aufzunehmen.

14. Teleskopschiene nach einem der vorhergehenden Ansprüche, **dadurch gekennzeichnet, dass** die erste und zweite Führungsschiene (110, 130) sowie die Zwischenschiene (120) jeweils eine Länge (L) aufweisen, die einer ersten Länge (L1) der Teleskopschiene (100) in der zusammengefahrenen Position entspricht, wobei die Teleskopschiene (100) in der ausgefahrenen Position eine zweite Länge (L2) aufweist, die zumindest annähernd der doppelten ersten Länge (L1) entspricht, und wobei ein relativer Verfahrweg zwischen der ersten Führungsschiene (110) und der Zwischenschiene (120) sowie der zweiten Führungsschiene (130) und der Zwischenschiene (120) zum Bewegen der Teleskopschiene (100) von der zusammengefahrenen Position in die ausgefahrene Position, oder umgekehrt, jeweils zumindest annähernd der Hälfte der ersten Länge (L3) entspricht.

15. Teleskopschiene nach einem der vorhergehenden Ansprüche, **dadurch gekennzeichnet, dass** die Zwischenschiene (120) über eine direkte Anbindung mit einer translatorischen Bewegungseinheit (240) verbindbar ist.
